# EUROPEAN PATENT APPLICATION

(11) **EP 4 488 426 A1**
(43) Date of publication of application: **08.01.2025**
(21) Application number: 24170432.9
(22) Date of filing: 16.04.2024
(51) Int. Cl.: C25D 17/06, B23Q 3/06, F01D 5/28

(54) **ADDITIVELY MANUFACTURED TOOLING FOR COATING COMPONENTS USING ELECTRICALLY DRIVEN AQUEOUS PROCESSES**

(30) Priority: 20.06.2023 US 202318337807
(71) Applicant: Chromalloy Gas Turbine LLC, Palm Beach Gardens, Florida 33410 (US)
(72) Inventor: Hopkins, Zachary, Palm Beach Gardens, 33410 (US)
(74) Representative: Glück Kritzenberger Patentanwälte PartGmbB

(57) **Abstract**

A tool for securing a component for a treatment process and methods of making and using same. A method for securing a component for a treatment process includes obtaining a tool for retaining the component during the treatment process. The tool includes a cantilevered plate. The method includes associating the tool with a support bar and securing the component to the tool such that the cantilevered plate is in contact with the component.

## Description

### FIELD OF THE DISCLOSURE

The disclosure relates generally to the field of tools for securing components for coating. More specifically, the disclosure relates to additively manufactured tools usable to coat components via an electrically driven aqueous process.

### SUMMARY

The following presents a simplified summary of the invention in order to provide a basic understanding of some aspects of the invention. This summary is not an extensive overview of the invention. It is not intended to identify critical elements of the invention or to delineate the scope of the invention. Its sole purpose is to present some concepts of the invention in a simplified form as a prelude to the more detailed description that is presented elsewhere herein.

In an aspect, a method for securing a component for a treatment process includes obtaining a tool for retaining the component during the treatment process. The tool includes a cantilevered plate. The method includes associating the tool with a support bar and securing the component to the tool such that the cantilevered plate is in contact with the component.

In some aspects, according to any one of the preceding aspects, the tool includes a bracket and an adapter connectable by a shaft.

In some aspects, according to any one of the preceding aspects, the cantilevered plate extends from a rear surface of the adapter, and the shaft and the adapter are additively manufactured to be of a unitary construction.

In some aspects, according to any one of the preceding aspects, the bracket includes a socket with a channel.

In some aspects, according to any one of the preceding aspects, the socket is accessible through an opening in the support bar.

In some aspects, according to any one of the preceding aspects, the channel includes an asymmetric shape and is configured to receive the shaft only in one orientation.

In some aspects, according to any one of the preceding aspects, the method includes obtaining a cover configured to slide over the tool.

In some aspects, according to any one of the preceding aspects, the method includes rotating a rotatable member to cause the cantilevered plate to contact the component.

In some aspects, according to any one of the preceding aspects, the method includes lowering the support bar and the component secured to the tool in an aqueous solution to coat the component using an electrically driven aqueous process.

In some aspects, according to any one of the preceding aspects, the method includes associating a second tool with the support bar, and the tool and the second tool extend from the support bar at the same angle.

In some aspects, according to any one of the preceding aspects, the tool includes an adapter configured to retain a dovetail of a blade of a gas turbine.

In some aspects, according to any one of the preceding aspects, the adapter includes two opposing cylindrical rods, and each opposing cylindrical rod is configured to interface with the dovetail.

In some aspects, a tool for securing a component for a treatment process is disclosed. The tool comprises a bracket including a socket with a channel and an adapter comprising a body that includes a cantilevered plate. The adapter is configured to receive the component for the treatment process. The tool includes a shaft configured to be received within the channel for coupling the adapter to the bracket.

In some aspects, according to any one of the preceding aspects, the adapter includes a bolt that passes through the body and is coupled to the cantilevered plate.

In some aspects, according to any one of the preceding aspects, the channel includes an asymmetrical shape, and the shaft has a shape that corresponds to the shape of the channel.

In some aspects, according to any one of the preceding aspects, the treatment process is an electrically driven aqueous process, the bracket is coupled to a support bar, and the adapter is manufactured using an additive process such that the body and the cantilevered plate are of an integral construction.

In some aspects, according to any one of the preceding aspects, the tool includes a polymer cover configured to slide over the adapter.

In some aspects, a method for coating an aerospace component using an electrically driven aqueous process is disclosed. The method comprises obtaining an additively manufactured tool for retaining the aerospace component during the electrically driven aqueous process. The tool includes an adapter with a cantilevered plate, a bracket with a socket having a channel, and a shaft coupled to the adapter and receivable within the socket to couple the adapter to the bracket. The method includes securing the aerospace component to the adapter such that the cantilevered plate is in contact with the aerospace component, coupling the adapter to the bracket via the shaft, and associating the bracket with cathode bar.

In some aspects, according to any one of the preceding aspects, the aerospace component includes a dovetail, the dovetail includes a terminal wall, and the cantilevered plate contacts the terminal wall of the dovetail of the aerospace component.

In some aspects, according to any one of the preceding aspects, the adapter includes two opposing cylindrical bars to engage the dovetail during the electrically driven aqueous process.

These and other features, aspects and advantages of the present invention will become better understood with reference to the following description and appended claims. The accompanying drawings, which are incorporated in and constitute a part of this specification, illustrate aspects of the invention and, together with the description, serve to explain the principles of the invention.

### BRIEF DESCRIPTION OF THE DRAWINGS

Illustrative embodiments of the present disclosure are described in detail below with reference to the attached drawing Figures.
Figure 1 is a perspective view of a PRIOR ART gas turbine blade.
Figure 2A is a perspective view of a PRIOR ART cathode for coating blades using electrically driven aqueous processes.
Figure 2B is a front view of an adapter of the PRIOR ART cathode of Figure 2A.
Figure 2C is a front view of the PRIOR ART adapter of Figure 2B with a gas turbine blade secured thereto.
Figure 3A is a perspective view of a PRIOR ART cathode with adapters that are not aligned with each other.
Figure 3B is a front view of a deformed adapter of the PRIOR ART cathode of Figure 3A.
Figure 4 is a perspective view of a cathode, according to an embodiment of the present disclosure.
Figure 5 is a perspective view of a tool of the cathode of Figure 4 for coating a component in an electrically driven aqueous process, according to an embodiment of the present disclosure.
Figures 6A and 6B are perspective views of a bracket of the tool of Figure 5.
Figure 7A is a perspective view of an adapter of the tool of Figure 5.
Figure 7B is a front view of the adapter of Figure 7A.
Figures 8A and 8B are perspective views of a cover for the adapter of Figure 7A.
Figure 9 is a perspective view of the adapter of Figure 7A after the cover of Figure 8A has been coupled thereto.
Figure 10 is a front view of the adapter of Figure 7A after a gas turbine blade and the cover of Figure 8A is secured thereto.
Figure 11A is a schematic showing a cantilevered plate of the adapter of Figure 7A spaced apart from a dovetail of a blade secured to the adapter.
Figure 11B is a schematic showing the cantilevered plate of the adapter of Figure 7A being brought into contact with the dovetail of the blade.
Figure 12A is a perspective view of a support bar of a cathode, according to an embodiment of the present disclosure.
Figure 12B is a perspective view of the support bar of Figure 12A with openings introduced therein, according to an embodiment of the present disclosure.
Figure 12C is a perspective view of the support bar of Figure 12B with brackets whose sockets are disposed within the openings of the support bar, according to an embodiment of the present disclosure.
Figure 12D is a perspective view of the support bar of Figure 12C with shafts and adapters shown coupled to the sockets to form a cathode, according to an embodiment.
Figure 12E is a perspective view of the cathode of Figure 12D showing a blade coupled to each adapter, according to an embodiment of the present disclosure.
Figure 12F is a perspective view of the cathode of Figure 12E with covers disposed on the adapters and the blades, according to an embodiment.
Figure 13 is a flowchart illustrating a method for additively manufacturing tools for a cathode and using these tools of the cathode to coat components in an electrically driven aqueous process, according to an embodiment of the present disclosure.
Figure 14 is a front view of another PRIOR ART adapter for coating a blade in an electrically driven aqueous process.
Figure 15 is a bottom perspective view of a PRIOR ART blade.
Figure 16 is a perspective view of another tool for coating a component in an electrically driven aqueous process, according to an embodiment of the present disclosure.
Figure 17 is another perspective view of the tool of Figure 16.

### DETAILED DESCRIPTION

The term electrophoretic deposition (EPD) is used for a broad range of industrial processes, including electrocoating, cathodic electrodeposition, anodic electrodeposition, electrophoretic coating, and electrophoretic painting. A characteristic feature of EPD is that colloidal particles suspended in a liquid medium migrate under the influence of an electric field (electrophoresis) and are deposited onto an electrode. All colloidal particles that can be used to form stable suspensions and that can carry a charge can be used in electrophoretic deposition. This includes materials such as polymers, pigments, dyes, ceramics and metals. Aqueous EPD, and other electrically driven aqueous processes, are commonly used for applying coatings to metal fabricated products, such as automobile bodies and parts, tractors and heavy equipment, electrical switch gear, appliances, metal furniture, beverage containers, fasteners, and many other industrial products.

Electrically driven aqueous processes are also used in the aviation industry to coat various components. Aviation components may be coated using an electrically driven aqueous process to achieve the desired electrical and corrosion resistance, to reduce wear and friction, to improve heat tolerance, et cetera. Gas turbine blades and vanes are examples of aviation components that may be coated using one or more electrically driven aqueous processes.

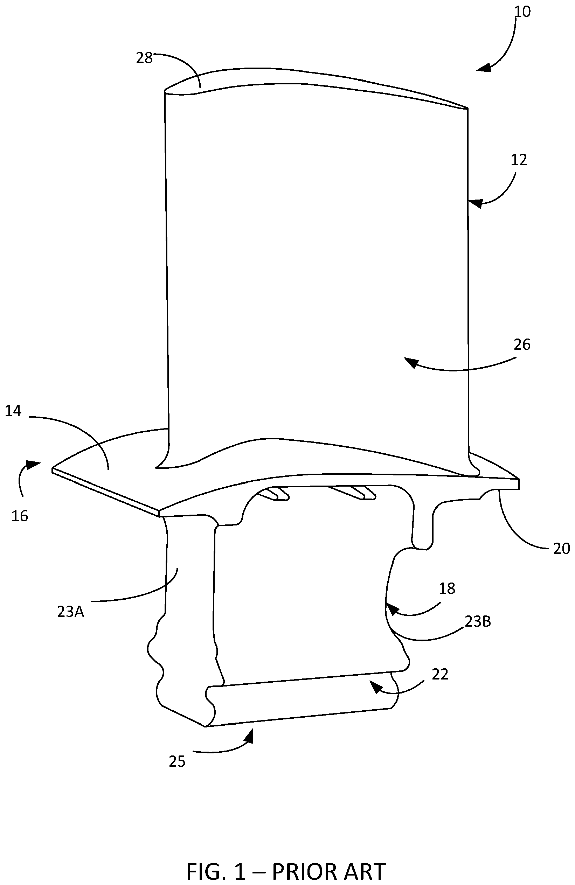

Figure 1 shows a gas turbine blade 10, as known in the art. The turbine blade 10 generally comprises an airfoil 12 extending from a top or gas path side surface 14 of a platform 16 and a root fixing portion or "dovetail" 18 depending from an undersurface 20 of the platform 16. The dovetail 18 may include one or more serrations or tangs 22 that extend laterally from one side 23A of the dovetail 18 to an opposing side 23B of the dovetail 18. The dovetail 18 may terminate at a terminal or bottom wall 25 that may span between the dovetail sides 23A and 23B. The dovetail 18, including the tangs 22 and the bottom wall 25 thereof, may be adapted for interlocking engagement in a corresponding slot defined in the periphery of a hub of a turbine rotor.

The airfoil 12 may have a pressure side 26, a suction side opposite the pressure side 26, and tip 28. The tip 28 may be configured to interact with a tip shroud to, e.g., reduce leakage of hot combustion gases over the tip 28. The airfoil 12, e.g., the pressure side thereof, may come into contact with combustion gases that are at an extremely high temperature. The airfoil 12 or portions thereof may therefore be coated with heat-resistant coatings. During operation, the tip 28 may rub against the tip shroud, and the tip 28 may therefore additionally or alternately be coated with wear-resistant coatings. In like fashion, one or more other portions of the blade 10 may be coated with different materials depending on the environment in which these portions are located and the stresses encountered thereby.

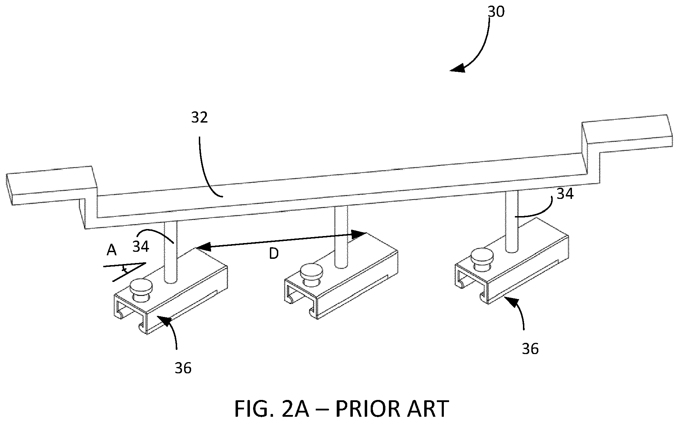

One or more portions of the blade 10 may be coated using an electrically driven aqueous process. The electrically driven aqueous coating process may employ a cathode and an anode. Figure 2A shows an example cathode 30 as is known in the art. A component, such as an aviation (e.g., the blade 10) or other component, may be secured to the cathode 30 to effectuate coating via the electrically driven aqueous process.

The cathode 30 may have a laterally extending support bar 32. A plurality of connecting members 34 may be secured to and suspended from the support bar 32. Each connecting member 34 may have an adapter 36 secured thereto. Each connecting member 34 may therefore connect one adapter 36 to the support bar 32 such that the connecting member 34 extends between the adapter 36 and the support bar 32. Components to be coated, such as blade or vanes, may each be secured to one adapter 36. The cathode 30, together with the components secured to the adapters 36 thereof, may be lowered into an aqueous solution. An anode, such as a conformal mesh or another anode, may be situated within the aqueous solution at a given distance. The interaction between the cathode and the anode may create a transfer of energy to resultantly cause each component secured to an adapter 36 to be coated. For example, the component may be coated with platinum (such as with platinum aluminide), cubic born nitride (CBN), or another coating. In applications, a portion of the component may be covered to allow for another portion of portions of the component to be coated in the aqueous solution.

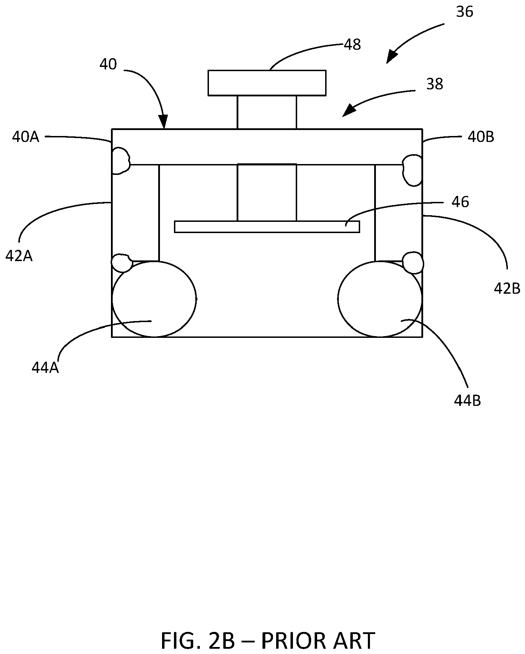

Figure 2B shows one adapter 36 of the cathode 30 in more detail. The adapter 36 may have a generally U-shaped body 38. The body 38 may have an upper wall 40 and opposing side walls 42A and 42B. Specifically, the sidewall 42A may extend generally perpendicularly from one end 40A of the upper wall 40 and the sidewall 42B may extend generally perpendicularly from an opposing end 40B of the upper wall 40. The sidewalls 42A and 42B may extend generally perpendicularly from the upper wall 40 in the same direction. The sidewalls 42A and 42B may therefore be spaced apart from each other and face each other.

The sidewall 42A may have a generally cylindrical rod 44A coupled thereto. The sidewall 42B may likewise have a generally cylindrical rod 44B coupled thereto. The cylindrical rods 44A and 44B may face each other, be generally planar, and may be spaced apart from each other and the upper wall 40.

The adapter 36 may further include a flapper plate 46 that may be movably secured within the body 38. For example, a bolt or other fastener 48 may extend through the upper wall 40 into the body 38 and the flapper plate 46 may be movably secured to the bolt 48. The bolt 48 may be rotated to cause the flapper plate 46 to move vertically within the body 38 (e.g., the bolt 48 may be rotated in one direction to cause the flapper plate 46 to move in a downward direction and may be rotated in the opposite direction to cause the flapper plate 46 to move in an upward direction). As discussed herein, a component, such as the dovetail of a blade or vane, may be secured within the body 38 such that the cylindrical rods 44A and 44B each contact and hold the dovetail of the blade or vane. The flapper plate 46 may be caused to contact the bottom wall of the dovetail and may ensure continuous electrical contact between the blade and the adapter 36 during the aqueous coating process.

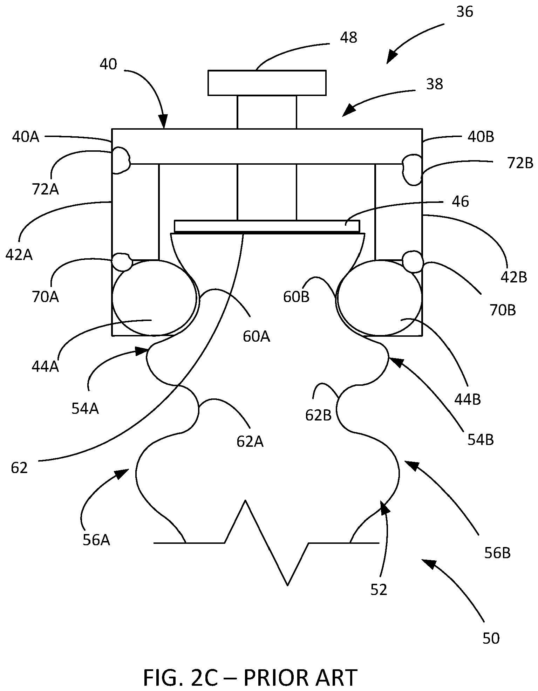

Figure 2C shows the adapter 36 with a blade 50 secured thereto. The blade 50 may be an example of the turbine blade 10 shown in Figure 1 or another blade or vane. The blade 50 has a dovetail 52 having an axially-extending terminal wall 62. A plurality of serrations or tangs 54A and 56A extend axially from one side (e.g., the pressure side) of the dovetail 52 and a plurality of serrations or tangs 54B and 56B correspondingly extend axially from the other side (e.g., the suction side) of the dovetail 52. The tang 54A may be associated with valleys 60A and 62A, and the tang 56A may be associated with valley 62A. The tang 54B may likewise be associated with valleys 60B and 62B, and the tang 56B may be associated with valley 62B. Valleys 60A and 60B may each be proximate the terminal wall 62 relative to valleys 62A and 62B.

In the example illustrated in Figure 2C, the blade 50 is suspended from the adapter 36 such that the dovetail 52 of the blade 50 is in contact with each of the cylindrical rods 44A and 44B and the flapper plate 46 is in contact with a dovetail terminal wall 62. More specifically, the cylindrical rod 44A extends into the valley 60A and contacts the blade 50. The cylindrical rod 44B likewise extends into the valley 60B and contacts the blade 50. The flapper plate 46 may be tightened using the bolt 48 such that it contacts and pushes against the terminal wall 62. The blade 50 may be so secured to the adapter 36, together with other blades (each of which may likewise be secured to another adapter of the cathode 30). The cathode 30 (see Figure 2A) may then be lowered into the aqueous solution with the blades (e.g., blade 50) to coat one or more portions of each blade.

As shown in Figure 2A, each adapter 36 is spaced apart from an adjacent adapter 36 by a distance D. Further, each adapter 36 extends in the horizontal plane at the same angle A relative to the support bar 32, ensuring that a component, when secured to a respective adapter 36, is likewise maintained at the same angle from the support bar 32 as another component. The distance D and the angle A may affect the transfer of energy from the cathode 30 to the anode, and consequently, may impact the coating applied to a particular component. Therefore, it may be important to ensure that each adapter 36 is maintained at the distance D from an adjacent adapter 36 and that each adapter 36 extends at the same angle A from the support bar 32. One having skill in the art will appreciate that the distance D and the angle A may vary depending on the particular application and the part being coated.

In the prior art, various portions of the adapter 36 may be created using manual fabrication processes. For example, the cylindrical rod 44A may be welded to the sidewall 42A via a weld joint 70A (see Figure 2C) and the cylindrical rod 44B may be welded to the sidewall 42B via a weld joint 70B. Similarly, the sidewalls 42A and 42B of the adapter 36 may be welded to the upper wall 40 by weld joints 72A and 72B, respectively. Further, each adapter 36 may be welded to a respective connecting member 34, and each connecting member 34 may be welded to the support bar 32. The various weld joints may introduce stress to the components of the cathode 30. Over time, as additional components are secured to the adapters 36 and coated in aqueous solutions, the welds may begin to deform. The deformation of the welds may adversely affect the integrity of the coupling of the adapter 36 to a respective component, and thereby, adversely impact the coating process.

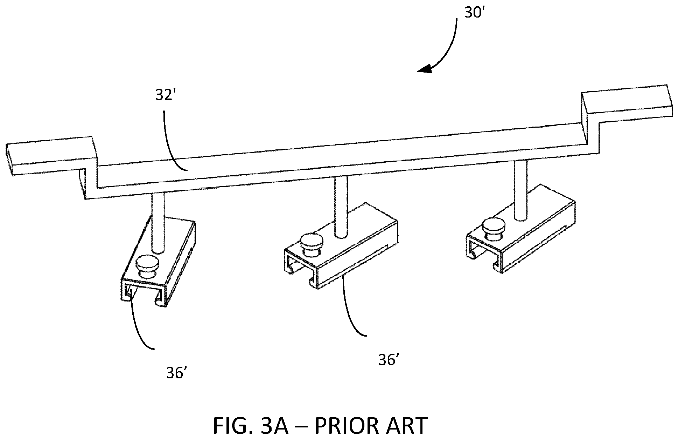

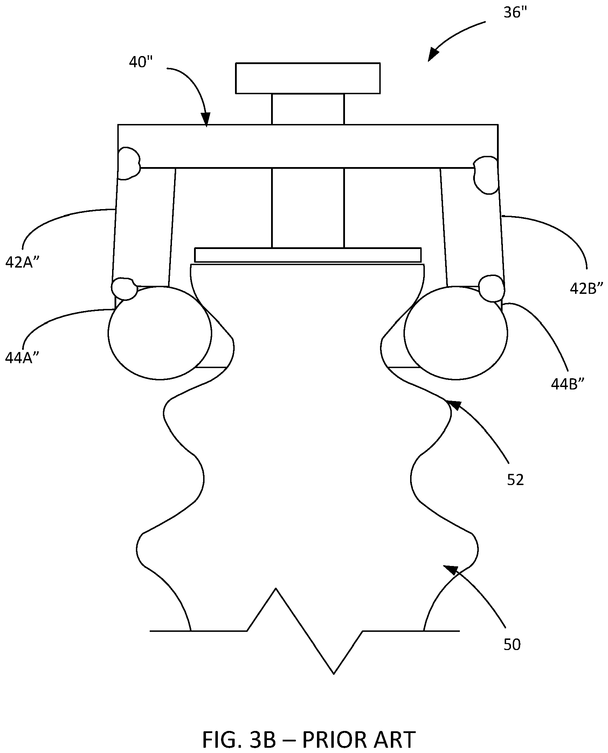

Figures 3A and 3B illustrate the types of defects that may be introduced in the prior art cathode 30 over time. Figure 3A shows a prior art cathode 30' having a support bar 32' and adapters 36'. The cathode 30' may be an example of the cathode 30 after the cathode 30 has been used for coating components over a plurality of cycles. Corresponding reference numbers are used to indicate corresponding parts of the cathode 30 and cathode 30'. As can be seen, the rigors of the coating processes have distorted the alignment of the adapters 36' such that each adapter 36' no longer extends from the support bar 32' at the same angle (e.g., angle A in Figure 2A).

Figure 3B shows an adapter 36". The adapter 36" may be an example of the adapter 36 after the adapter 36 has been used to coat a plurality of components. The blade 50 (see Figure 2C), and specifically the dovetail 52 thereof, is secured within the adapter 36". Corresponding reference numbers are used to indicate corresponding parts of the adapter 36 and adapter 36". As illustrated, the adapter 36" has deformed relative to the adapter 36. For example, the sidewalls 42A" and 42B" are no longer perpendicular to the upper wall 40". Further, the cylindrical rods 44A" and 44B" are no longer aligned with each other.

Defects, such as the defects illustrated in Figures 3A and 3B, may reduce the efficacy of the aqueous coating process. One or more such defects may be introduced over time because manual fabrication techniques, e.g., welding, used to fabricate the prior art cathode 30 and adapter 36, may not stand up to repeated use of the cathode 30 and adapter 36 in electrically driven aqueous coating processes.

Another disadvantage of the prior art cathode 30, e.g., the adapter 36 thereof, is its propensity to mar or damage the component secured to the adapter 36. As noted, the bolt 48 is typically rotated (e.g., manually using a tool) to cause the flapper plate 46 (see Figure 2B) to move to ensure contact between the flapper plate 46 and the component. If the bolt 48 is not appropriately tightened, the flapper plate 46 may not contact the component for the duration of the coating process, and thereby impact the electrolytic processes. To increase the likelihood of continued contact between the flapper plate 46 and the component, the bolt 48 may be overtightened. Such may cause the flapper plate 46 or other portion of the adapter 36 to dig into the component and introduce a nick, scratch, or dent therein. The component may therefore have to be discarded, which may needlessly add to the time and cost it takes to coat a given number of components. It may be desirable to have a more resilient cathode whose components (e.g., adapter) do not deform from repeated use.

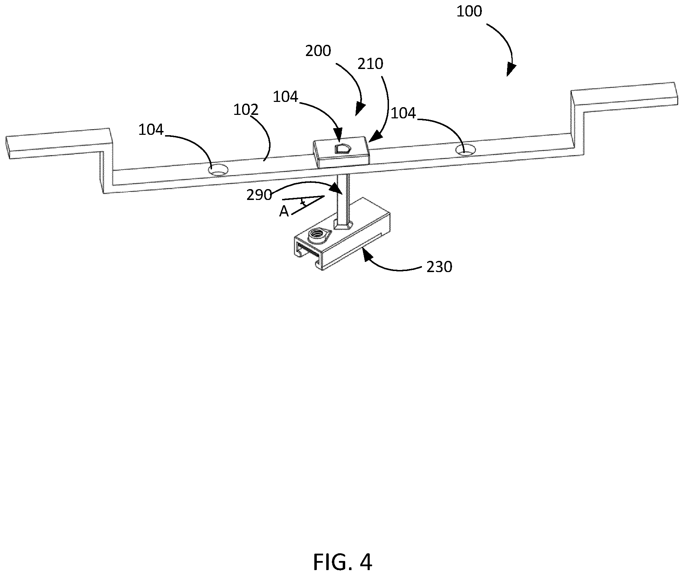

Figure 4 shows a cathode 100, according to certain embodiments of the disclosure. The cathode 100 has a support bar 102. The support bar 102 may be manufactured using an electrically conductive material, such as a metal. In certain implementations, the support bar 102 may be manufactured using Titanium (e.g., Ti-64), stainless steel, or another suitable metal. In some examples, the prior art support bar 32 may be used (e.g., the connecting members 34 and adapters 36 thereof may be removed and replaced with a tool manufactured using the techniques disclosed herein).

The support bar 102 may include a plurality of openings 104. Each opening 104 may be configured for the installation of a tool 200 for retaining a component during an aqueous coating process. The component may be an aviation component (e.g., a blade or vane) or a component for a land-based power generation system or turbine, including but not limited to an airfoil, turbine blade, compressor or fan blade, turbine vane, compressor vane, or other suitable component or portion thereof. The component may likewise be a component used in the automotive industry, in the maritime industry, or any other suitable component that is to be coated via an electrically driven aqueous process.

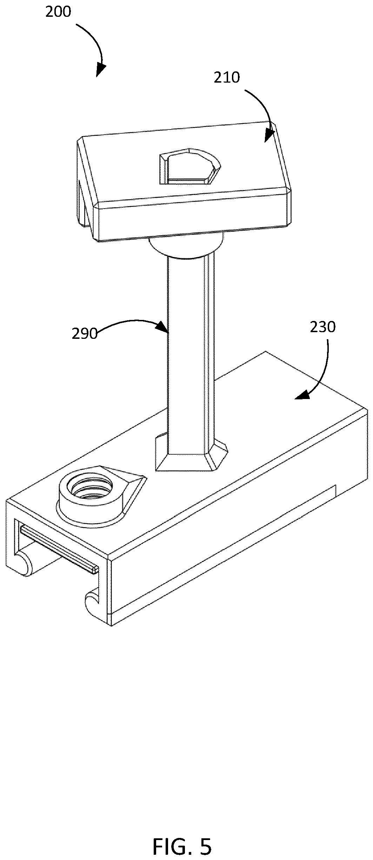

Figure 5 shows the tool 200 in more detail. The tool 200 may include a bracket 210, an adapter 230, and a shaft 290. Each of these components are described in more detail herein. In an aspect, the tool 200 may be manufactured using an additive process. As described herein, certain features of the tool 200 (e.g., a cantilevered beam thereof) may be manufactured only using an additive process. Further, the tool 200 may be more durable and may provide for increased coating efficiency relative to the conventionally manufactured prior art adapter 36. In some embodiments of the disclosure, the additive process may be or may include laser powder bed fusion. In some embodiments of the disclosure, the additive processes may include Selective Laser Melting (SLM), Direct Metal Laser Sintering (DMLS), Direct Metal Laser Melting (DMLM), or another suitable additive process.

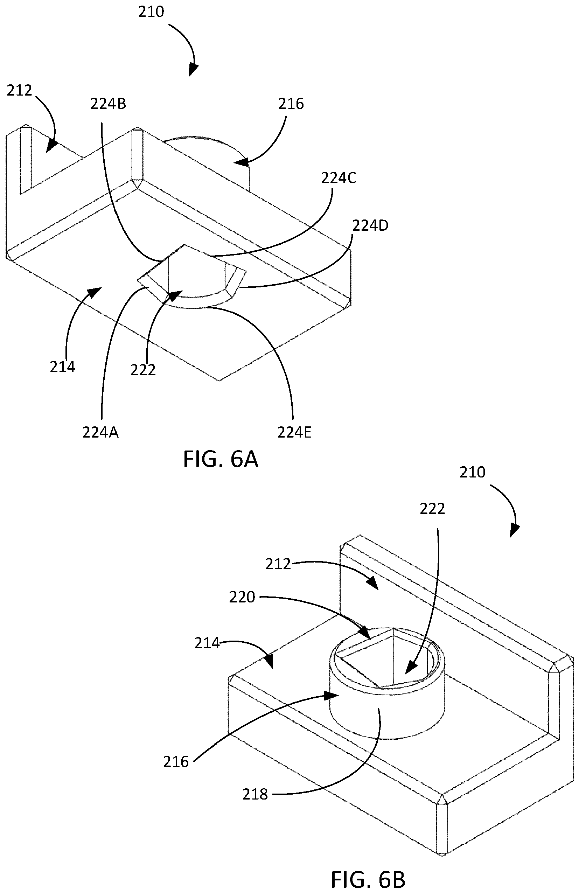

Figures 6A and 6B show the bracket 210 of the tool 200 in additional detail. The bracket 210 may generally be an L-shaped bracket having an alignment wall 212 and a supporting wall 214 that extend generally perpendicularly to each other. The alignment wall 212 and the supporting wall 214 may also be referred to herein as the first wall 212 and the second wall 214, respectively.

The supporting wall 214 may include a socket or receptacle 216, that may extend from the supporting wall 214 in the same direction as the alignment wall 212. The socket 216 may have an outer surface 218 and an inner surface 220. The outer surface 218 of the socket 216 may be generally cylindrical and circumscribe the inner surface 220. The inner surface 220 may have defined therein an opening or channel 222 that, as discussed herein, is configured to receive one end of the shaft 290. As shown in Figure 6A, the channel 222 may extend through the supporting wall 214.

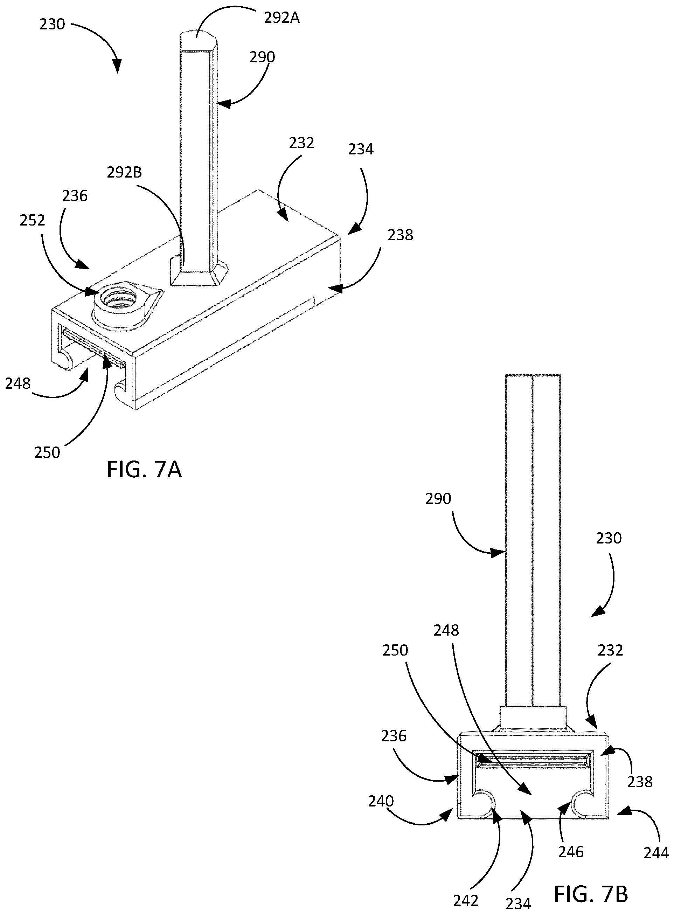

In some examples, the channel 222 may not be symmetrical or regular (e.g., may not be perfectly cylindrical). For example, in the illustrated embodiment, the channel 222 is defined by five sides 224A-224E, and side 224E is shown to be curved. The shaft 290 (see Figures 5, 7A, and 7B) may have an asymmetrical shape that is complementary to the shape of the channel 222 such that an end of the shaft 290 may be slidably received within the channel 222. The irregular shape of the channel 222 may be a fail-safe or error-prevention feature, also sometimes referred to as a "poka-yoke" mechanism, which may ensure that the shaft 290 can only be received in the channel 222 in one way (i.e., the appropriate orientation). In certain embodiments of the disclosure, the channel 222 may take on other shapes (e.g., other irregular shapes) and the shaft 290 may be configured so as to fit within the channel 222 only in the correct orientation. As described herein, such may ensure that the adapter 230 extends at the desired angle in the horizontal plane and that all adapters 230 extend at the same angle.

Figures 7A and 7B show the adapter 230 in more detail. The adapter 230 may have an upper wall 232. A rear wall 234 and two opposing sidewalls 236 and 238 may extend generally perpendicularly from the upper wall 232 in the same direction (e.g., downward). The sidewalls 236 and 238 may also be referred to herein as the first and second sidewalls, respectively.

The first sidewall 236 may have a bottom side 240. A first tangent bar 242 may be provided at the bottom side 240. The first tangent bar 242 may be generally cylindrical (e.g., may be frustocylindrical) and may extend inboard towards the second sidewall 238. The second sidewall 238 may have a bottom side 244. A second tangent bar 246 may be provided at the bottom side 244. The second tangent bar 246 may be generally identical to the first tangent bar 242 and may extend inboard towards the first sidewall 236. In certain embodiments of the disclosure, the first tangent bar 242 and second tangent bar 246 may extend in the same vertical plane and face each other.

The upper wall 232, the first sidewall 236 and the first tangent bar 242, the second sidewall 238 and the second tangent bar 246, and the rear wall 234, may collectively define a channel or slot 248. The slot 248 may be configured to receive a component or a portion thereof (e.g., configured to receive a dovetail of a gas turbine blade) for an electrically driven aqueous coating process.

A cantilevered or floating plate 250 may extend from the rear wall 234 into the slot 248. In certain embodiments of the disclosure, the cantilevered plate 250 may be spaced apart from the upper wall 232, and may not contact either of the first sidewall 236 or the second sidewall 238. A cantilevered plate, such as the cantilevered plate 250, may not be practically fabricated with the adapter 230 unitarily using conventional manufacturing techniques (e.g., welding and machining). Additive manufacturing may allow for the cantilevered plate 250 to be manufactured unitarily with the adapter 230. The unitary construction may ensure that the cantilevered plate 250 does not deform after repeated use.

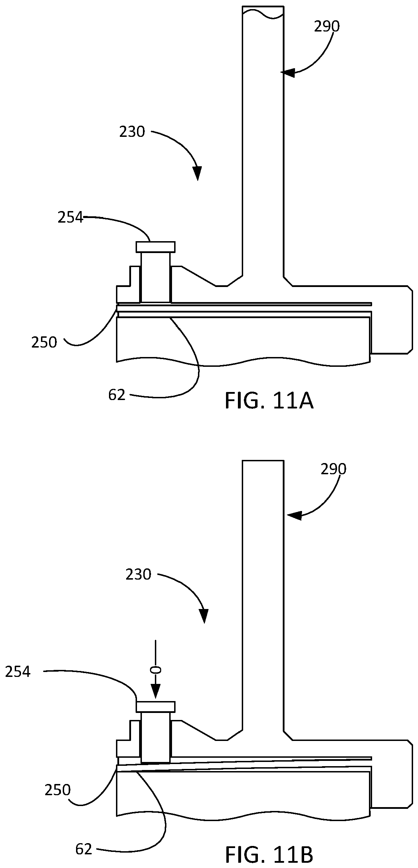

The upper wall 232 may have a threaded nut 252 formed as part thereof. The threaded nut 252 may be configured to receive a bolt 254 (see Figures 11A and 11B) having corresponding threading. The bolt 254 may be rotated within the threaded nut 252 and be caused to push down on the cantilevered plate 250 as discussed herein.

The shaft 290 may be secured to the adapter 230, and specifically, to the upper wall 232 thereof. More particularly, the shaft 290 may have a first terminal end 292A and a second terminal end 292B, and the second terminal end 292B may be secured to the upper wall 232. In aspects, the second terminal end 292B may be unitary with and permanently secured to the upper wall 232. For example, the adapter 230 and the shaft 290 may be additively manufactured together as a unitary piece. The first terminal end 292A of the shaft 290 may be configured to be matingly received in the channel 222 of the socket 216 (see Figure 6B) of the bracket 210.

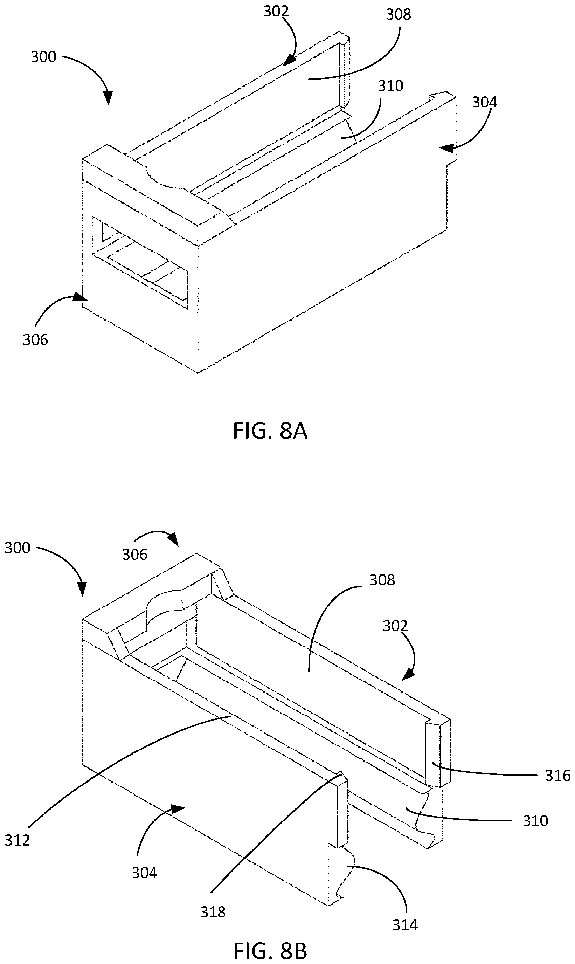

As noted, the bracket 210 may be manufactured using additive manufacturing. The adapter 230, together with the shaft 290, may likewise be manufactured using additive manufacturing as a unitary device. The bracket 210, and the adapter 230 and the shaft 290, may each be fabricated using an electrically conductive material, such as Titanium (e.g., Ti-64) or another suitable material. A cover 300, illustrated in more detail in Figures 8A and 8B, may likewise be manufactured using an additive process. In certain embodiments of the disclosure, the cover 300 may be made of polymer. Manufacturing the cover 300 with polymer may reduce the likelihood that the cover 300 would nick, scratch, or dent the component when the cover 300 comes in contact therewith.

The cover 300 may have a first sidewall 302, a second sidewall 304, and a front wall 306 (see Figures 8A and 8B). The first sidewall 302 may extend generally perpendicularly from one end of the front wall 306 and the second sidewall 304 may extend generally perpendicularly from the other end of the front wall 306.

The first sidewall 302 may have a first planar or generally planar portion 308 and a first contoured portion 310. The second sidewall 304 may likewise have a second planar or generally planar portion 312 and a second contoured portion 314. The first planar portion 308 and the second planar portion 312 may face each other. The first contoured portion 310 and the second contoured portion 314 may likewise face each other.

The first planar portion 308 of the first sidewall 302 may have a notch 316 extending from a distal end (i.e., the end furthest away from the front wall 306). The second planar portion 312 may likewise have a notch 318 extending from the distal end thereof. The notches 316 and 318 may extend towards and face each other. The cover 300 may be adapted to fit over and cover the adapter 230 (e.g., while a component is held by the adapter 230). More specifically, as discussed further below, the cover 300 may be configured to fit over the adapter 230 after the component to be coated is secured within the adapter 230, to ensure that the component does not move relative to the adapter 230.

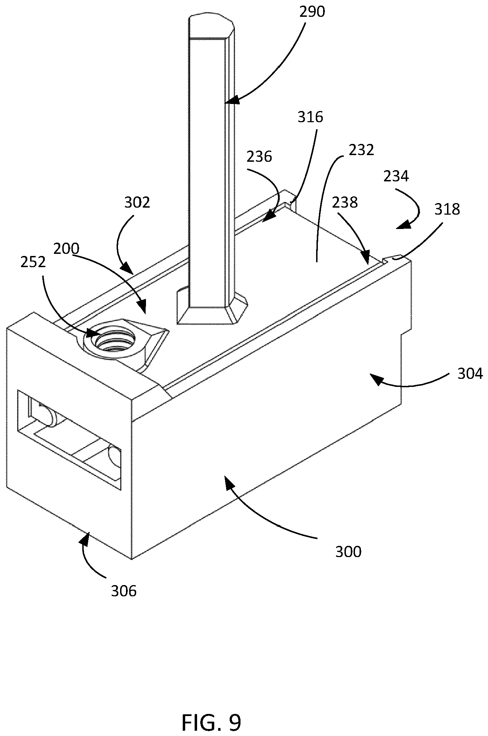

Figure 9 shows the cover 300 after it is slid onto the adapter 230 (for clarity, the adapter 230 in Figure 9 is not illustrated together with a component for coating). As can be seen (see also Figures 7A-7B and 8A-8B), the cover 300 fits over the adapter 230 such that the first sidewall 302 of the cover 300 is adjacent and in contact with the first sidewall 236 of the adapter 230 and the second sidewall 304 of the cover is adjacent and in contact with the second sidewall 238 of the adapter 230. When the cover 300 is slid over the adapter 230 in this fashion, the notch 316 and the notch 318 may each engage the rear wall 234 of the adapter 230 and ensure that the cover 300 is movably fixed relative to the adapter 230.

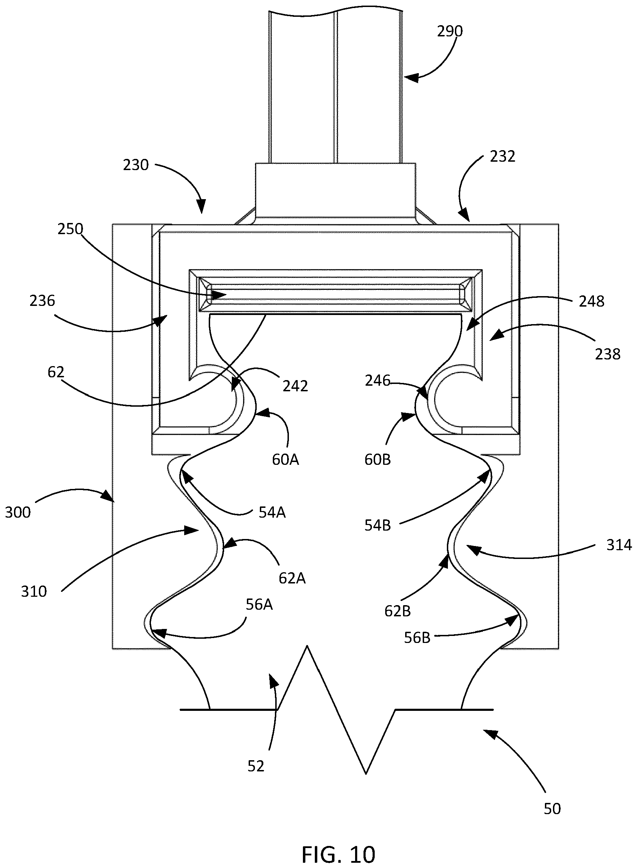

Figure 10 shows the adapter 230 with the blade 50 (see Figure 2C) secured thereto for coating. The cover 300 is also shown interfacing with the adapter 230 and the blade 50.

In more detail, the dovetail 52 of the blade 50 may be slid into the slot 248 defined by the upper wall 232, the first sidewall 236 and the first tangent bar 242, the second sidewall 238 and the second tangent bar 246, and the rear wall 234 of the adapter 230. When the dovetail 52 is so slid inside the slot 248, the first tangent bar 242 may be adjacent the valley 60A and may contact one or both surfaces forming the valley 60A. Similarly, the second tangent bar 246 may be adjacent the valley 60B and may contact one or more both surfaces forming the valley 60B.

The cover 300 may thereafter be slid onto the adapter 230 and the dovetail 52 of the blade 50. As described above, the notches 316 and 318 (see Figure 8B) may engage the rear wall 234 of the adapter 230. Further, the contoured portion 310 of the cover 300 may engage the tangs 54A and 56A and the valley 62A, and the contoured portion 314 of the cover 300 may engage the corresponding tangs 54B and 56B and the valley 62B. The cover 300 may therefore ensure that the blade 50 is firmly secured to the adapter 230 and that there is minimal or no relative movement between the adapter 230 and the blade 50.

As shown in Figure 10, when the blade 50 is secured to the adapter 230, the cantilevered plate 250 may be atop and adjacent the terminal wall 62 of the dovetail 52. Figures 11A and 11B show the interaction of the cantilevered plate 250 and the terminal wall 62 of the dovetail 52 in more detail. Specifically, as shown in Figure 11A, the bolt 254 has not been tightened, and therefore, the cantilevered plate 250 is spaced apart from the dovetail terminal wall 62. Figure 11B shows that the bolt 254 has been rotated to push the cantilevered plate 250 towards the dovetail terminal wall 62. The cantilevered plate 250 is therefore in contact with the dovetail terminal wall 62. The bolt 254 may ensure that the cantilevered plate 250 remains in contact with the dovetail terminal wall 62, which may assure continuous and consistent electrical contact between the adapter 230 and the blade 50 during the aqueous coating process without causing any damage to the blade 50.

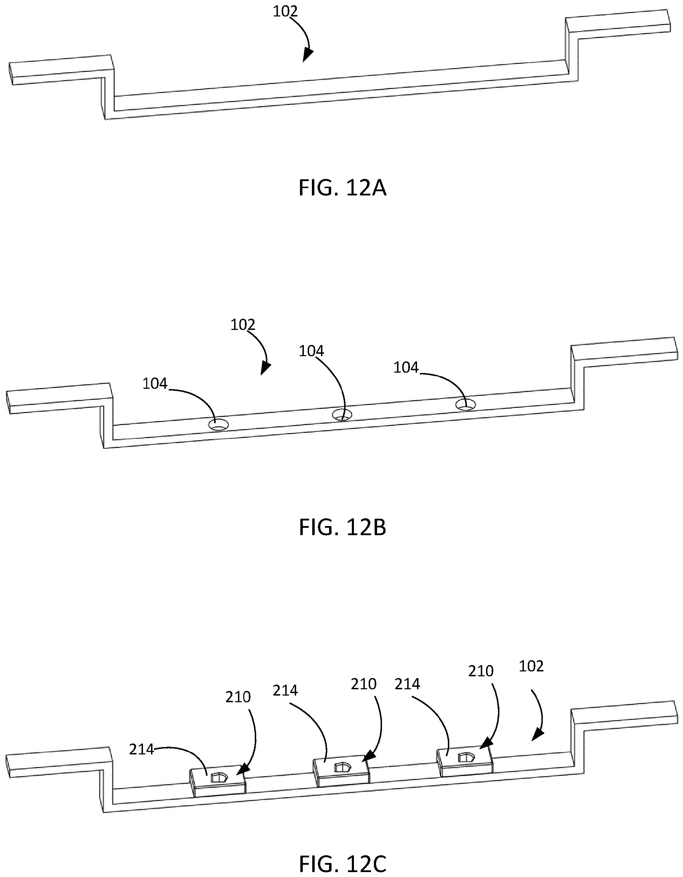

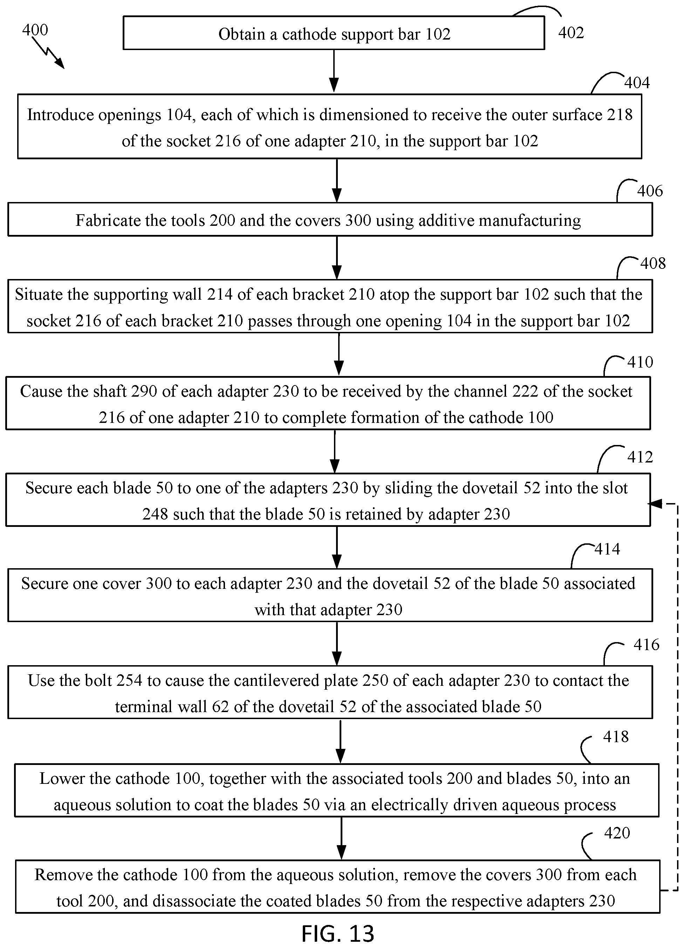

Focus is directed to Figure 13 (see also Figures 12A-12F) to illustrate a method 400 for manufacturing and using the cathode 100 having a plurality of tools 200 to coat components using an electrically driven aqueous process.

At step 402, a cathode support bar 102 may be obtained. For example, as shown in Figure 12A, a cathode support bar 102 comprising Titanium or another suitable material may be obtained. A support bar 32 of a prior art cathode 30 may also be obtained and retrofitted in line with the disclosure herein.

At step 404, a plurality of openings 104 may be introduced in the support bar 102, as shown in Figure 12B. Each opening 104 may be dimensioned to receive the socket 216 (see Figure 6B) of one bracket 210, and specifically, the outer surface 218 of the socket 216.

At step 406, the tool 200 - i.e., the bracket 210, the adapter 230, and the shaft 290 - and the cover 300 may be fabricated using additive manufacturing. For example, the bracket 210, the adapter 230, and the shaft 290 may be additively manufactured using Titanium and the cover 300 may be additively manufactured using one or more polymers. The adapter 230 and the shaft 290 may be additively fabricated as a unitary piece. Step 406 may be carried out before step 404, before step 402, or simultaneously or partially simultaneously with steps 402 and 404. Further, various portions of the tool 200 may be fabricated at or generally at the same time or may be fabricated at different times.

In some applications, a plurality of like components (e.g., a plurality of blades, vanes, or aviation or other components) may need to be coated. In these applications, a plurality of like tools 200 and covers 300 may be fabricated using additive manufacturing at step 406. For example, where three components are to be coated, three tools 200 and three covers 300 may be manufactured (e.g., together or separately) to allow for the three components to be coated at the same time.

As shown in Figure 12C, at step 408, the supporting wall 214 of each bracket 210 of each tool 200 may be situated atop the support bar 102 such that the socket 216 of each bracket 210 passes through one opening 104 in the support bar 102 (see also Figure 6B). When the supporting wall 214 of a bracket 210 is so situated atop the support bar 102, the alignment wall 212 of the bracket 210 may be adjacent and in contact with the support bar 102. The alignment wall 212 (see Figure 6B) of each bracket 210 may be on the same side of the support bar 102, thereby ensuring that each bracket 210 is oriented in the same manner (and thus the channel 222 of each socket 216 is oriented in the same manner to receive the shaft 290 of an adapter 230).

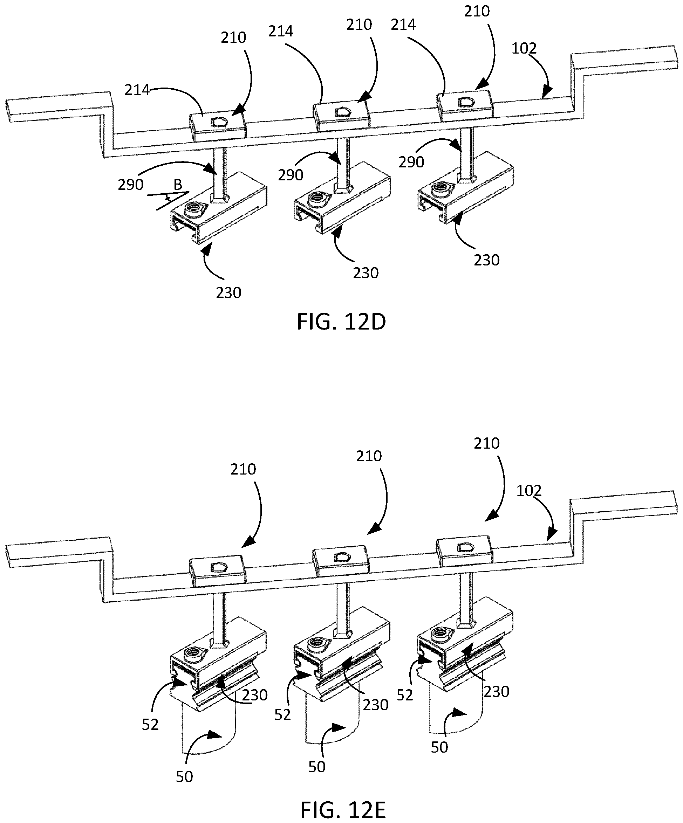

As illustrated in Figure 12D, at step 410, the shaft 290 of each adapter 230 may be received in the socket 216 of one bracket 210, and specifically, in the channel 222 thereof. The failsafe feature of each channel 222 may ensure that the shaft 290 of each bracket 210 is oriented in the same manner, and as such, that each adapter 230 extends at the same angle B in the horizontal plane relative to the support bar 102. In some applications, each bracket 210 of each tool 200 may be secured to the support bar 102, e.g., may be welded thereto or secured using adhesive or via other suitable means. Such may permanently affix the tool 200 (i.e., the bracket 210 together with the shaft 290 and the adapter 230) to the support bar 102. The formation of the cathode 100 (see Figure 4) may now be complete.

At step 412, as shown in Figure 12E, each of the components to be coated (blades 50 in this example) may be secured to one of the adapters 230. More specifically, the dovetail 52 of each blade 50 may be slid into the slot 248 defined by the upper wall 232, the first sidewall 236 and the first tangent bar 242, the second sidewall 238 and the second tangent bar 246, and the rear wall 234 of one adapter 230 (see also Figure 10), such that the blade 50 is retained by the adapter 230. When the dovetail 52 is so slid inside the slot 248, the first tangent bar 242 may be adjacent the valley 60A and the second tangent bar 246 may be adjacent the valley 60B. Each blade 50 to be coated may now be oriented in the same manner as the other blades 50.

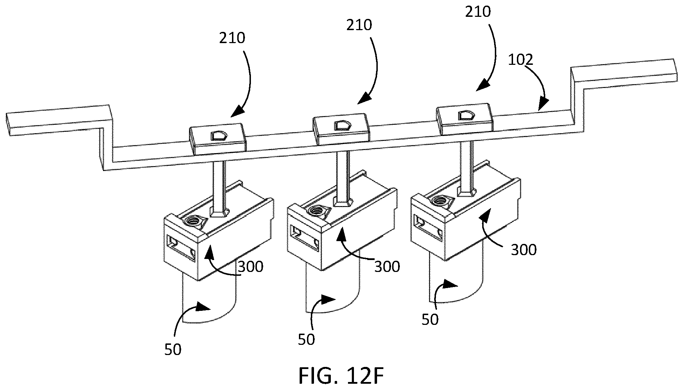

At step 414, as shown in Figure 12F, one cover 300 may be secured to each adapter 230 and to the dovetail 52 of the blade 50 associated with that adapter 230. As discussed above with reference to Figure 10, the contoured portion 310 of the cover 300 may engage the tangs 54A and 56A and the valley 62A, and the contoured portion 314 of the cover 300 may engage the corresponding tangs 54B and 56B and the valley 62B. The cover 300 may therefore ensure that the blade 50 is firmly secured to the associated adapter 230 and that there is minimal or no relative movement between the adapter 230 and the blade 50.

At step 416, one bolt 254 may be coupled to the threaded nut 252 of each adapter 230 (see Figure 11B) and tightened to cause the cantilevered plate 250 to contact the terminal wall 62 of the dovetail 52 of each blade 50. The cantilevered plate 250 may assure continuous electrical contact between the adapter 230 and the blade 50 without marring or otherwise damaging the blade 50. In some examples, step 416 may be performed before step 414 (i.e., first the cantilevered plate 250 may be made to contact the terminal wall 62 of the dovetail 52 and then the cover 300 may be slid onto the adapter 230 and the dovetail 52).

At this point, the assembly of the blades 50 to be coated with the cathode 100 may be complete. At step 418, the cathode 100, together with the associated tools 200 and blades 50, may be lowered into an aqueous solution. The cathode 100 and the anode in the aqueous solution may interact and the transfer of energy may cause each blade 50 to be uniformly coated.

Once the blades 50 have been coated as desired, at step 420 the cathode 100 may be removed from the aqueous solution, the covers 300 may be slid off the associated adapters 230, and each blade 50 may be disassociated from the associated tool 200. The coated blade 50 may now be ready for use, or may undergo additional processing (e.g., undergo a post-processing process such as machining) prior to use.

When another batch of blades 50 is to be coated, the method 400 may return to step 412 where each blade 50 in the new batch may be secured to one of the adapters 230 as discussed herein. The cathode 100, together with the tools 200, may in this way be used to coat a plurality of blades 50 using electrically driven aqueous processes. It has been found that the additively manufactured tools 200 do not easily deform and are usable to coat a much larger number of blades 50 relative to the prior art adapters 36 (Figure 2B). Further, the additively manufactured tools 200, because of their integral and uniform construction, may exhibit a much lower resistance relative to their prior art counterparts manufactured using conventional techniques; consequently, the tools 200 may allow for the blades 50 to be coated using electrically driven coating processes more efficiently relative to adapters 36 of the prior art.

While the illustrated tool 200 is usable to coat blades and vanes of gas turbines, one having skill in the art will understand that such is merely exemplary. The techniques described herein may be used to additively manufacture tools (e.g., additively manufacture tools having cantilevered plates) for coating many different types of components (e.g., components used in the automotive industry, in the maritime industry, or any other suitable component that is to be coated via an electrically driven aqueous process). In some examples, the tool 200 may be used for platinum plating or for other suitable coating processes. In other examples still, a tool with a cantilevered plate as described herein may be used to secure a component for any suitable treatment process.

The airfoils of gas turbine blades may be coated using platinum plating in their entirety. Other coatings may be applied only to one or more portions of the airfoil. For example, the tip of airfoils (e.g., tip 28 (Figure 1)) may be coated using cubic born nitride (CBN) for additional wear resistance. Akin to platinum plating, CBN coating may be effectuated using an electrically driven aqueous process.

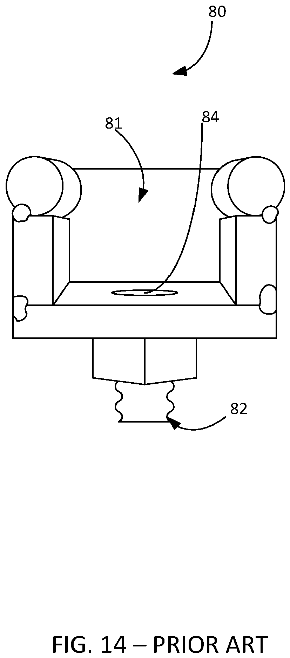

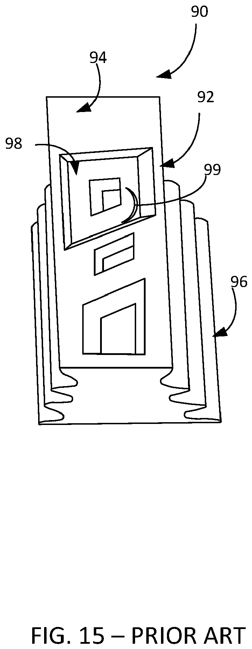

Figure 14 shows a prior art adapter 80 usable for CBN coating of the tip of an airfoil. The prior art adapter 80 may have a slot 81 configured to retain the dovetail of a blade. As shown in Figure 15, a blade 90 has a dovetail 92 with a terminal surface 94 and tangs 96. The terminal surface 94 is shown to have a raised detail or feature 98.

The blade 90, and specifically the dovetail 92 thereof, may be housed within the slot 81 of the prior art adapter 80. A bolt 82 of the adapter 80 may be passed through an orifice 84 to ensure securement of the blade 90 and the adapter 80. The bolt 82 may mar the dovetail 92, e.g., the raised feature 98 thereof (see dent 99 on raised feature 98). Such may render the blade 90 unfit for use.

Other disadvantages associated with the adapter 80 may be rooted in its conventional construction. Specifically, the various surfaces of the adapter 80 (e.g., the side walls, the cylindrical rods, the upper wall, the rear wall, et cetera) may be welded to each other, and these welds may distort over time as the adapter 80 is repeatedly used in aqueous coating processes. A distorted adapter 80 may not be suitable for use in aqueous coating processes.

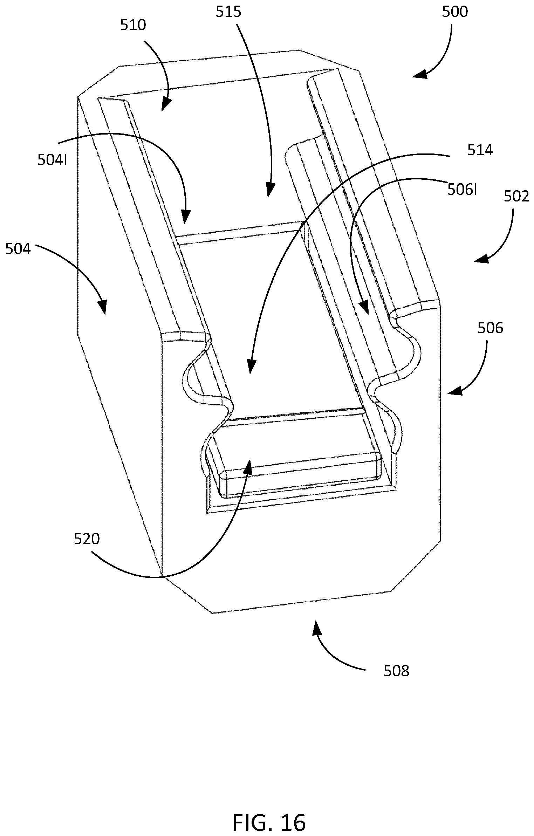

Figure 16 shows another tool 500 usable to coat a component via an electrically driven aqueous process. The tool 500 may comprise a body 502 having sidewalls 504 and 506, an upper wall 508, and a rear wall 510.

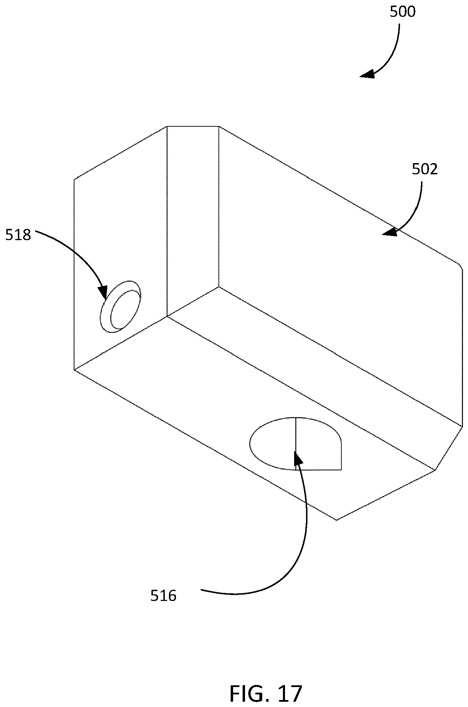

A slot 515 may be defined by the inner surfaces of the rear wall 510, the sidewalls 504 and 506, and upper wall 508. A cantilevered plate 514 may extend from the rear wall 510 inside the slot 515. The dovetail 92 of the blade 90 may be slid into the slot 515 to cause the blade 90 to be retained by the tool 500. The inner surfaces 5041 and 5061 of the sidewalls 504 and 506, respectively, may be contoured to matingly accept the tangs 96 of the dovetail 92 of the blade 90. The cantilevered plate 514 may contact the terminal surface 94 of the dovetail 92. In certain embodiments of the disclosure, the body 502 may have one or more threaded openings (e.g., opening 516 in Figure 17) through which a corresponding member may be passed to facilitate securement of the blade 90 and the tool 500. Another opening (e.g., opening 518) may be provided in the body to allow for an electrically connective member to connect the tool 500 to a terminal.

Unlike the tool 200, the tool 500 may not require a cover (e.g., the cover 300) to ensure securement of the blade to the tool 500. This may be because the contoured inner surfaces 5041 and 506I may interface with multiple pairs of tangs 96, and therefore, render additional implements for ensuring securement of the blade and the tool 500 unnecessary.

Akin to the tool 200, the tool 500 may be manufactured using additive manufacturing. One benefit of fabricating the tool 500 using additive manufacturing may be the ability to integrally fabricate the cantilevered plate 514 to accommodate the raised feature 98 of the terminal surface 94. Specifically, as can be seen in Figure 16, the cantilevered plate 514 may be fabricated to include a depressed portion 520 that corresponds to the raised feature 98 on the terminal surface 94 of the dovetail 92. The blade 90 may therefore be slid into the slot 515 and securely retained by the tool 500 without marring or otherwise damaging the blade 90, notwithstanding the raised feature 98. A plurality of blades 90 may therefore be coated using the tool 500 over time without damaging any blade 90. The tool 500, manufactured using additive manufacturing techniques, may be more durable relative to the adapter 80 fabricated using welding and other conventional techniques and may result in more efficient coating.

While the tool 500 illustrated herein is described with reference to a blade, one having skill in the art will understand that other tools (e.g., a tool having a cantilevered beam) manufactured using additive manufacturing techniques may be manufactured to accommodate and coat other components using electrically driven aqueous processes.

Some non-exhaustive implementation examples are described below.

In an implementation, a method for securing a component for a treatment process includes obtaining a tool for retaining the component during the treatment process. The tool includes a cantilevered plate. The method includes associating the tool with a support bar and securing the component to the tool such that the cantilevered plate is in contact with the component.

In some implementations, according to any one of the preceding implementation, the tool includes a bracket and an adapter connectable by a shaft.

In some implementations, according to any one of the preceding implementations, the cantilevered plate extends from a rear surface of the adapter, and the shaft and the adapter are additively manufactured to be of a unitary construction.

In some implementations, according to any one of the preceding implementations, the bracket includes a socket with a channel.

In some implementations, according to any one of the preceding implementations, the socket is accessible through an opening in the support bar.

In some implementations, according to any one of the preceding implementations, the channel includes an asymmetric shape and is configured to receive the shaft only in one orientation.

In some implementations, according to any one of the preceding implementations, the method includes obtaining a cover configured to slide over the tool.

In some implementations, according to any one of the preceding implementations, the method includes rotating a rotatable member to cause the cantilevered plate to contact the component.

In some implementations, according to any one of the preceding implementations, the method includes lowering the support bar and the component secured to the tool in an aqueous solution to coat the component using an electrically driven aqueous process.

In some implementations, according to any one of the preceding implementations, the method includes associating a second tool with the support bar, and the tool and the second tool extend from the support bar at the same angle.

In some implementations, according to any one of the preceding implementations, the tool includes an adapter configured to retain a dovetail of a blade of a gas turbine.

In some implementations, according to any one of the preceding implementations, the adapter includes two opposing cylindrical rods, and each opposing cylindrical rod is configured to interface with the dovetail.

In some implementations, a tool for securing a component for a treatment process is disclosed. The tool comprises a bracket including a socket with a channel and an adapter comprising a body that includes a cantilevered plate. The adapter is configured to receive the component for the treatment process. The tool includes a shaft configured to be received within the channel for coupling the adapter to the bracket.

In some implementations, according to any one of the preceding implementations, the adapter includes a bolt that passes through the body and is coupled to the cantilevered plate.

In some implementations, according to any one of the preceding implementations, the channel includes an asymmetrical shape, and the shaft has a shape that corresponds to the shape of the channel.

In some implementations, according to any one of the preceding implementations, the treatment process is an electrically driven aqueous process, the bracket is coupled to a support bar, and the adapter is manufactured using an additive process such that the body and the cantilevered plate are of an integral construction.

In some implementations, according to any one of the preceding implementations, the tool includes a polymer cover configured to slide over the adapter.

In some implementations, a method for coating an aerospace component using an electrically driven aqueous process is disclosed. The method comprises obtaining an additively manufactured tool for retaining the aerospace component during the electrically driven aqueous process. The tool includes an adapter with a cantilevered plate, a bracket with a socket having a channel, and a shaft coupled to the adapter and receivable within the socket to couple the adapter to the bracket. The method includes securing the aerospace component to the adapter such that the cantilevered plate is in contact with the aerospace component, coupling the adapter to the bracket via the shaft, and associating the bracket with cathode bar.

In some implementations, according to any one of the preceding implementations, the aerospace component includes a dovetail, the dovetail includes a terminal wall, and the cantilevered plate contacts the terminal wall of the dovetail of the aerospace component.

In some implementations, according to any one of the preceding implementations, the adapter includes two opposing cylindrical bars to engage the dovetail during the electrically driven aqueous process.

Many different arrangements of the various components depicted, as well as components not shown, are possible without departing from the spirit and scope of the present disclosure. Embodiments of the present disclosure have been described with the intent to be illustrative rather than restrictive. Alternative embodiments will become apparent to those skilled in the art that do not depart from its scope. A skilled artisan may develop alternative means of implementing the aforementioned improvements without departing from the scope of the present disclosure.

It will be understood that certain features and subcombinations are of utility and may be employed without reference to other features and subcombinations. Not all steps listed in the various Figures need be carried out in the specific order described.

## Claims

1. A method for securing a component for a treatment process, the method comprising:
obtaining a tool for retaining the component during the treatment process, the tool including a cantilevered plate;
associating the tool with a support bar; and
securing the component to the tool such that the cantilevered plate is in contact with the component.

2. The method of claim 1, wherein the tool includes a bracket and an adapter connectable by a shaft, wherein preferably
the cantilevered plate extends from a rear surface of the adapter; and
the shaft and the adapter are additively manufactured to be of a unitary construction.

3. The method of claim 2, wherein the bracket includes a socket with a channel, wherein preferably the socket is accessible through an opening in the support bar.

4. The method of claim 3, wherein the channel includes an asymmetric shape and is configured to receive the shaft only in one orientation.

5. The method of any of any of claims 1 to 4, further comprising obtaining a cover configured to slide over the tool.

6. The method of any of claims 1 to 5, further comprising rotating a rotatable member to cause the cantilevered plate to contact the component.

7. The method of any of claims 1 to 6, further comprising lowering the support bar and the component secured to the tool in an aqueous solution to coat the component using an electrically driven aqueous process.

8. The method of claim 7, further comprising associating a second tool with the support bar; and wherein the tool and the second tool extend from the support bar at the same angle.

9. The method of claim 8, wherein the tool includes an adapter configured to retain a dovetail of a blade of a gas turbine.

10. The method of claim 9, wherein the adapter includes two opposing cylindrical rods, each opposing cylindrical rod configured to interface with the dovetail.

11. A tool for securing a component for a treatment process, the tool comprising:
a bracket comprising a socket with a channel;
an adapter comprising a body that includes a cantilevered plate, the adapter configured to receive the component for the treatment process; and
a shaft configured to be received within the channel for coupling the adapter to the bracket.

12. The tool of claim 11, wherein the adapter includes a bolt that passes through the body and is coupled to the cantilevered plate.

13. The tool of claim 11 or 12, wherein:
the channel includes an asymmetrical shape; and
the shaft has a shape that corresponds to the asymmetrical shape of the channel.

14. The tool of any of claims 11 to 13, wherein:
the treatment process is an electrically driven aqueous process;
the bracket is coupled to a support bar; and
the adapter is manufactured using an additive process such that the body and the cantilevered plate are of an integral construction.

15. The tool of any of claims 11 to 14, further comprising a polymer cover configured to slide over the adapter.
